# EUROPÄISCHE PATENTSCHRIFT

(11) **EP 3 051 669 B1**
(45) Veröffentlichungstag und Bekanntmachung des Hinweises auf die Patenterteilung: **22.08.2018**
(21) Anmeldenummer: 15152755.3
(22) Anmeldetag: 27.01.2015
(51) Int. Cl.: H02K 3/12, H02K 15/00, H02K 15/04, H02K 15/085

(54) **Wicklung für einen Stator, elektrische Maschine, sowie Verfahren zur Herstellung der Wicklung für einen Stator**
Winding for a stator, electric machine, and method for manufacturing the winding for a stator
Bobine pour un stator, machine électrique, et procédé de fabrication de la bobine pour un stator

(43) Veröffentlichungstag der Anmeldung: 03.08.2016
(73) Patentinhaber: Brusa Elektronik AG, 9466 Sennwald (CH)
(72) Erfinder: Stöck, Martin, 9478 Azmoos (CH)
(74) Vertreter: Rösler, Frank

(56) Entgegenhaltungen:
- EP-A1- 0 984 544
- WO-A1-99/30405
- FR-A1- 2 437 722

## Beschreibung

Die Erfindung betrifft eine Wicklung für einen Stator einer elektrischen Maschine, nach dem Oberbegriff des Anspruchs 1, eine elektrische Maschine mit einem Stator, deren Wicklung unter Verwendung von Formlitzen hergestellt ist, nach dem Oberbegriff des Anspruchs 7, sowie ein Verfahren zur Herstellung der Wicklung für einen Stator einer elektrischen Maschine, nach dem Oberbegriff des Anspruchs 8.

Als Wicklung ist im Stand der Technik z.B. eine verteilte Wicklung bekannt. Damit diese Antriebsmaschinen einen hohen Systemwirkungsgrad und eine sehr geringe Drehmomentwelligkeit erreichen, hat sich als Bewicklung des Stators für Antriebsmaschinen von Straßenfahrzeugen im Leistungsbereich oberhalb 70kW die sogenannte verteilte Wicklung etabliert. Auch wenn die verteilte Wicklung bei Industriemotoren ähnlicher Baugrösse dominiert, haftet ihr der Ruf der schlechten Herstellbarkeit aufgrund geringer Möglichkeit der Automatisierung an. So erweisen sich vor allem die Prozessschritte der Verschaltung der einzelnen Spulen als nur bedingt grossserientauglich.

Bekannt ist auch die Technik der sogenannten Formstäbe (im Grossmaschinenbau Roebelstäbe genannt), welche in Nuten geschoben werden und stirnseitig entsprechend verbunden werden. Dadurch, dass die Stäbe aber gerade und nicht verdrillt sind, ist zwar die Automatisierbarkeit des Einschubprozesses, des Biegeprozesses und des Verschaltens zur Fertigstellung der Wicklung relativ einfach, jedoch leidet der Wirkungsgrad der elektrischen Maschine unter den Stromverdrängungseffekten des Kupfervollmaterials.

Unterschieden zu den Roebelstäben bzw. der Hair-Pin Wicklung ist die Formlitzen-Technik, bei welcher einzelne relativ dünne verdrillte Kupferleiter, denkbar wäre auch Aluminium oder ein anderes elektrisch leitendes Material, eingesetzt werden. Verfahren zur Herstellung eines Stators für eine elektrische Maschine mit Formlitzen-Technik umfassen das Einsetzen einer Mehrzahl von Formlitzen in die durch Statorzähne getrennte Nuten des Stators. Diese Formlitzen werden dann zur Bildung der Wicklung des Stators elektrisch leitend miteinander verbunden. Wenn sich die Formlitzen im Stator befinden, werden Sie oftmals zueinander verbogen, um eine Wellenwicklung zu realisieren. Während dieses Biegeprozesses besteht ebenfalls das Problem des Aufdrillens der Formlitze.

Die WO9930405A1 offenbart eine Wicklung und einen isolierten Leiter für elektrische Maschinen, insbesondere für den Stator davon, welche Wicklung aus einer Vielzahl von elektrisch isolierten Litzen besteht. Bekannt ist dabei eine Anordnung mit einer Anzahl von isolierten rechteckigen Kupferdrähten, die von einer gemeinsamen Isolierung umschlossen sind und ein Bündel mit rechteckigem Querschnitt bilden. Aber auch Kabel mit kreisförmigem Querschnitt wurden verwendet. Diese Kabel sind meist in kürzere Teilstücke unterteilt, die nach Einbringen in den elektrischen Bauteil miteinander verbunden werden. Speziell offenbart ist dabei eine Konstruktion mit einer stabilen elektrisch leitenden Verbindung der Kabeladern an zumindest einem Ende des Teilstücks, und die Schaffung stabiler, elektrischer Kontaktpunkte zwischen den Strängen. Durch Endhülsen an den Teilstücken können stabile elektrische Kontaktstellen zwischen den einzelnen Litzen geschaffen werden, und zusätzlich können auch zylindrischen Buchsen nach dem Ende der einzelnen Litzen für deren Zusammenhalt angeordnet sein.

Grundsätzlich ist das Problem beim Verbinden von Formlitzen durch einen Schweiss- oder Lötprozess die Verschmutzung im Verbindungsbereich. Da durch das Vorkompaktieren im Zuge der Herstellung der Formlitze selbst die Isolation von deren Einzeldrähten weggebrannt wird, befinden sich im Verbindungsbereich auch nach ordentlichem Reinigen immer noch Lackreste, welche die Verbindungsstelle verschmutzen und somit im Verbindungsprozess stören. Durch diese Verschmutzung ist Prozesssicherheit nicht gegeben.

Die Aufgabe der vorliegenden Erfindung ist eine Wicklung auf der Basis von Formlitzen, bei deren Einsatz in elektrischen Maschinen nicht nur die Effizienz und die thermische Dauerleistungsfähigkeit verbessert ist, sondern insbesondere eine vereinfachte automatisierte Herstellbarkeit der Stator-Wicklung ermöglicht ist. Eine weitere Aufgabe der Erfindung ist ein vereinfachtes und einfach automatisierbares Herstellverfahren für eine derartige Wicklung.

Die Aufgabe wird durch die Merkmale des unabhängigen Anspruchs 1, des abhängigen Anspruchs 7 sowie des unabhängigen Anspruchs 8 gelöst. Vorteilhafte Weiterbildungen sind in den Figuren und in den abhängigen Patentansprüchen dargelegt.

Die Erfindung geht dabei aus von einer Wicklung für einen Stator einer elektrischen Maschine. Dies kann insbesondere eine Wicklung für den Stator einer Drehfeldmaschine wie einem Motor oder Generator sein, wie er in Elektro- oder Hybridfahrzeugen zum Einsatz kommt. Diese Wicklung besteht typischerweise aus miteinander mechanisch als auch elektrisch leitend verbundenen Formlitzen, welche ihrerseits aus einer Mehrzahl von einzeln isolierten und vorteilhaft parallel verlaufenden und vorzugsweise verdrillten Einzeldrähten. Gegebenenfalls ist eine allen Einzeldrähten gemeinsame äußere Umhüllung vorgesehen. Zumindest einige der Einzeldrähte jeder Formlitze sind an zumindest einem Ende der Formlitze durch eine diese Einzeldrähte umschließende Hülse aus elektrisch leitendem Material mechanisch und elektrisch leitend miteinander und mit der Hülse verbunden. Die Hülsen zweier in der Wicklung in Richtung des Stromflusses aufeinanderfolgender Formlitzen sind mechanisch und elektrisch leitend verbunden..

Hier als auch in weiterer Folge wird der Begriff "aufeinanderfolgend" in Anwendung auf die Formlitzen od. dgl. so verwendet, dass damit in Richtung des Stromflusses hintereinanderliegende Elemente gemeint sind, was nicht unbedingt mit unmittelbarer örtlicher Nähe übereinstimmen muss.

Um den Stromfluss möglichst wenig zu behindern und eine grossen Leitungsquerschnitt auch im Verbindungsbereich der Formlitzen zu gewährleisten, liegen die Hülsen an der Verbindungsstelle bevorzugt flächig aneinander.

Zur Lösung der genannten Aufgabe sind die Hülsen an zumindest einem Ende der Formlitzen mit einer Lasche versehen sind und die Verbindung zweier Formlitzen über die zumindest eine Lasche hergestellt ist. Damit ist eine wesentlich sicherere, rasch herstellbare und durch einen einfach automatisierbaren Prozess machbare Wicklung gegeben, bei welcher aufgrund der Vergrößerung der Hülse die Handhabung erleichtert und eine bessere und sicherere Verbindung zweier Formlitzen-Enden ermöglicht ist.

Eine derartige Lasche kann sich bevorzugt axial über das Ende der Formlitzen hinaus erstrecken oder auch radial von der Formlitze weg ragen. Beide Varianten gestatten es, die Formlitze besser zu greifen und zu bewegen und vergrössern auch den Bereich, über welchen eine mechanische als auch elektrisch leitende Verbindung mit einer anschliessenden Formlitze hergestellt werden kann.

Bevorzugt sind ein einem Ende der Formlitze eine sich axial über das Ende der Formlitzen hinaus erstreckende Lasche und am entgegengesetzten Ende der Formlitze eine radial von der Formlitze weg ragende Lasche angeordnet.

Weiters ist bevorzugt, dass aufeinanderfolgende Formlitzen jeweils entgegengesetzt ausgerichtet sind und die Laschen unterschiedlicher Ausrichtung miteinander verbunden sind, was ebenfalls die Handhabung der Formlitzen als auch deren Verbindung untereinander erleichtert. Gemäß einer weiteren Ausführungsform der Erfindung ist vorgesehen, dass das äusserste Ende jedes Längsabschnittes am Ende der Formlitze einschliesslich der Hülse zugespitzt ausgeführt ist und zumindest linienförmig oder dachartig zulaufend endet oder ein flaches Ende mit einer Schweißnaht entlang der Verbindungslinie vorgesehen ist, oder eine Kerbe aufweist.

Bevorzugt sind die Hülsen und der Bereich der flächigen Verbindung mit den Hülsen der jeweils vorhergehenden bzw. nachfolgenden Formlitzen in einem Längsabschnitt der Formlitzen angeordnet, der in Bezug auf die Längsrichtung der Statornut schräg verläuft, und ende die Hülse sowie die Formlitze am Ende dieses schrägen Längsabschnittes. Aufgrund der flächigen Verbindung zwischen den Hülsen der verbundenen Formlitzen ist der Winkel zwischen den zwei Hülsen und damit den Enden der Formlitzen frei wählbar, so dass Konzepte ohne eine Gegenbiegung - d.h. ohne Endabschnitt der Formlitzen, der gegensinnig zur Biegung auf die zu verbindende andere Formlitze hin verläuft - möglich werden. Dies hat den großen Vorteil eines kürzeren Wickelkopfes, da somit die sonst notwendigen, parallel zu den Statornuten und der Statorachse verlaufenden Endbereiche der Formlitzen vermieden werden können.

Die Lösung der eingangs gestellten Aufgabe gelingt auch durch eine elektrische Maschine mit einem Stator, dessen Wicklung unter Verwendung von Formlitzen hergestellt ist, und welche dadurch gekennzeichnet ist, dass die Wicklung gemäss einem der vorhergehenden Absätze aufgebaut ist. Diese elektrische Maschine ist insbesondere eine Drehfeldmaschine, wie Motor oder Generator, insbesondere für ein Elektro- oder Hybridfahrzeug.

Weiters wird diese eingangs dargelegte Aufgabe gelöst durch ein Verfahren zur Herstellung der Wicklung für einen Stator einer elektrischen Maschine gelöst, das das Einbringen vorgefertigter Formlitzen in Nuten des Stators und die anschliessende Herstellung einer zumindest elektrisch leitenden Verbindung zwischen den aus den Statornuten herausragenden Enden der Formlitzen umfasst. Wiederum betrifft dies insbesondere den Stator einer Drehfeldmaschine wie einem Motor oder Generator, dessen Einsatzgebiet besonders vorteilhaft Elektro- oder Hybridfahrzeuge sind. Dabei werden zumindest einige der Einzeldrähte jeder Formlitze an zumindest einem Ende der Formlitze durch eine diese Einzeldrähte umschliessende Hülse aus elektrisch leitendem Material mechanisch und elektrisch leitend miteinander und mit der Hülse verbunden. Vorzugsweise werden dabei alle vorhandenen Einzeldrähte verbunden und auch von der Hülse ummantelt. Anschließend werden rasch und prozesssicher die Hülsen zweier in der Wicklung in Richtung des Stromflusses aufeinanderfolgender Formlitzen mechanisch und elektrisch leitend verbunden.

Zur Lösung der eingangs gestellten Aufgabe wird zur leichteren Handhabung der Formlitzen die Anbringung der Hülse und die mechanisch und elektrisch leitende Verbindung mit den Einzeldrähten bereits vor dem Einbringen der Formlitze in die Statornut durchgeführt.

Um die sich typischerweise an den äussersten Enden ansammelnden Verschmutzungen, insbesondere beim Kompaktieren ausgequetschtes Isoliermaterial der Einzeldrähte, einfach zu entfernen, wird vorzugsweise das äussere Ende der Formlitze einschliesslich der Hülse abgeschnitten.

Sehr prozesssicher und auch einfach zu automatisieren ist eine Ausführungsform des Verfahrens, bei welchem die Hülsen durch ein Schweissverfahren mechanisch und elektrisch leitend mit den Einzeldrähten verbunden werden. Bevorzugt kommt dabei Widerstandsschweißen zum Einsatz.

Gleiches gilt auch für eine Variante, bei welcher die Hülsen durch ein Lötverfahren mechanisch und elektrisch leitend miteinander verbunden werden. Vorzugsweise wird dabei ein Hartlot eingesetzt.

Um einen optimalen Stromfluss zwischen den verbundenen Formlitzen zu gewährleisten, werden vorzugsweise die Hülsen oder allfällige abstehende Fortsätze, Fahnen, Laschen oder dergleichen an der Verbindungsstelle flächig aneinander in Anlage gebracht.

Bei allen erfindungsgemässen Lösungen und Ausführungsformen ist bevorzugt immer eine im Wesentlichen ebene Fläche als Verbindungsstelle gegeben, die sauber und frei von Verschmutzungen ist bzw. einfach gereinigt werden kann. Zudem ist es bei allen Ausführungsformen vorteilhaft, wenn die Hülse (inklusive allfälliger daran vorgesehener Verbindungselemente wie Laschen etc.) bei mindestens einer Formlitze kleiner ist als die dafür vorgesehene Nutgeometrie.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind. Dabei können die in den Ansprüchen und in der Beschreibung erwähnten Merkmale jeweils einzeln für sich oder in beliebiger Kombination erfindungswesentlich sein.

Die Bezugszeichenliste ist Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

Es zeigen dabei:
- Fig. 1: eine schematische Darstellung der Verbindung zweier Formlitzen mit Hülsen an deren Ende,
- Fig. 2: eine schematische Darstellung eines Stators mit kurzem Wickelkopf,
- Fig. 3: eine schematische Darstellung der Verbindungsmöglichkeit von Formlitzen mit Hülsen mit Laschen,
- Fig. 4: eine andere Ausführungsform der Verbindungsmöglichkeit von Formlitzen mit Hülsen mit Laschen in schematischer Darstellung, und
- Fig. 5: einige Schritte im Herstellungsverfahren einer Statorwicklung unter Verwendung von Formlitzen mit Hülsen mit Laschen.

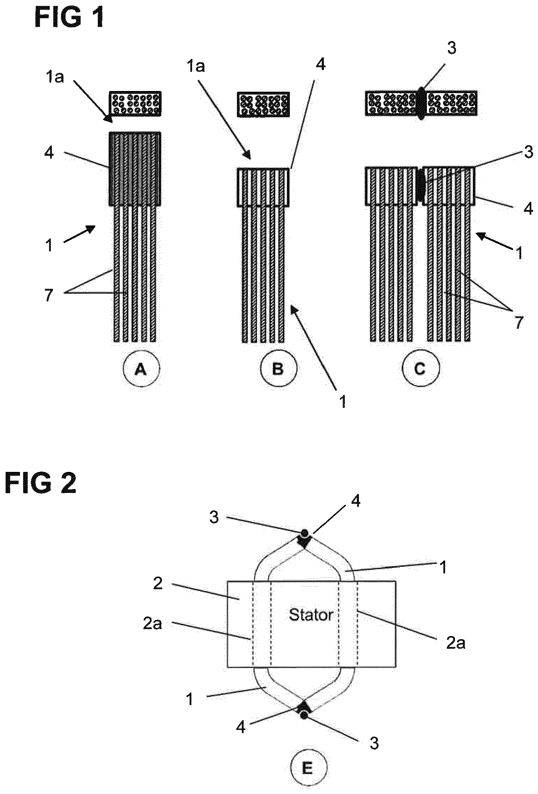

Im Zuge der Herstellung eines Stators einer elektrischen Maschine unter Verwendung von Formlitzen werden in einem ersten Schritt diese Formlitzen 1 zum Einsetzen in die Nuten 2a des Stators 2 und zur Bildung der Wicklung des Stators 2 hergestellt. Die Fig. 1 zeigt in schematischer Darstellung drei wesentliche Schritte im Herstellungsverfahren einer Wicklung für einen Stator einer elektrischen Maschine.

Ganz links und mit A bezeichnet ist eine Formlitze 1 dargestellt, deren Ende 1a mit einer Hülse 4 versehen ist. Um zuverlässig zu verhindern, dass sich Domänen im Querschnitt ausbilden, die mehrheitlich im Innern der Formlitze 1 verlaufen, sind meist deren Einzeldrähte 7 mehrfach verseilt.

Die Formlitze 1 wird im Betrieb von diversen Magnetfeldern durchdrungen (Streufelder, Rotorfelder, ...). Da sie an beiden Enden 1a durch die elektrische Verbindung zwischen den Einzeldrähten 7 der Formlitzen 1 elektrisch kurzgeschlossen ist, was zumindest zum Teil über die Hülse 4 bewerkstelligt ist, bilden sich zwischen den Einzeldrähten 7 ein und derselben Formlitze 1 eine oder mehrere Leiterschleifen. In diesen Leiterschleifen wird durch das vorhandene Feld eine Spannung induziert. Die parasitären Ströme in den Leiterschleife, die aus den induzierten Spannungen folgen, sollen möglichst gering ausfallen, was über eine geeignete Art der Verdrillung und Verseilung erreicht werden kann.

Üblicherweise sind die Einzeldrähte 7 der Formlitzen 1, die z.B. aus Kupfer, Aluminium oder ähnlichen elektrisch leitenden Materialien bestehen, jeweils von einer isolierenden Lackschicht umgeben. Das Verseilen bzw. Verdrillen und das Nachformen in die gewünschte Form bewirkt, dass die Einzeldrähte 7 mit ihren Lackschichten aneinandergedrückt werden. Die Lackschichten benachbarter Einzeldrähte 7 verkleben miteinander, beispielsweise durch Hinzugeben eines zusätzlichen Werkstoffs (z.B. eines Harzes), bzw. sorgen für eine Haftung, was den Formlitzen 1 als Ganzes Stabilität verleiht. Zusätzlich bzw. bei anderen Metallen, z.B. Aluminium, die von einer isolierenden Oxidschicht bedeckt sind, können die verdrillten Einzeldrähte 7 mit einem Kleber, z.B. Harz, getränkt werden. Zudem kann der Einsatz von Backlackdrähten sinnvoll sein, welche Art von Drähten durch Hitzeeinwirkung miteinander verbacken. Auch durch diese Maßnahme kann verbesserte Stabilität erreicht werden.

Für die mechanische Festigkeit innerhalb der Formlitze 1 können diese verbindenden Komponenten nach den Walzen von aussen aufgebracht werden. Dazu kommen als Imprägnierung beispielsweise Epoxy-Harze oder Silikon-Harze oder Vergussmassen auf Epoxy-Basis oder auf Polyurethan-Basis in Frage. Die Komponente können aber auch schon auf dem Draht vorhanden sein, der die Einzeldrähte 7 der Formlitze 1 darstellt, wie dies bei backlackbeschichteten Drähten der Fall ist. Schließlich könnten die die Einzeldrähte verbindenden Materialien auch innerhalb der Litze vorhanden sein. Ähnlich wie bei Faserverbundwerkstoffen könnten beispielsweise ein oder mehrere Fäden eines Polymers mit eingedrillt werden, das bei späterem Erwärmen verfliesst und das Litzenpaket zusammenbackt. Auch bei anderen Ausführungsformen der Formlitzen 1, bei der die mechanische Verbindung zusammen mit der elektrischen Kontaktierung an zumindest einem der Enden 1a der Formlitzen 1 erfolgt, kann zusätzlich eine derartige mechanische Verbindung über die Umhüllung bzw. Isolierung der Einzeldrähte 7 vorgesehen sein.

Vor dem Einsetzen in den Stator 2 werden die Formlitzen 1 auch auf die gewünschte Länge gebracht, vorzugsweise zugeschnitten. Das hat auch den Vorteil, dass sich der beim Kompaktieren der Einzeldrähte 7 der Formlitze 1 bzw. beim Zusammenpressen der Hülse 4 in Richtung äusseres Ende 1a der Formlitze 1 ausgequetsche Kleber oder ähnliche Verschmutzungen weggeschnitten werden. Die gekürzte Hülse 4 der in Fig.1 in der Mitte - Buchstabe B - dargestellten Formlitze 1 ist bereits rein bzw. einfach zu reinigen, so dass eine sichere Verbindung mit einer anderen Formlitze 1 herstellbar ist.

Ein Beispiel für ein vorteilhaftes Verbindungsverfahren ist ein Lötprozess. Bei dieser Variante werden durch ein Hartlot, welches sich eventuell schon vorher auf einer Hülsenseite befindet, zwei aneinanderliegende Flächen zweier Hülsen 4 verschiedener Formlitzen 1 miteinander verbunden. Somit ist im Verbindungsbereich 3 eine sowohl mechanische als auch elektrisch leitende Verbindung gegeben, wie in Fig. 1 ganz rechts beim Buchstaben C dargestellt ist. Das Hartlot kann auch nach erfolgter Konfektionierung der Enden 1a der Formlitzen 1 zugefügt werden. Das Erhitzen des Lotes kann durch verschiedenste Prozesse bewerkstelligt werden: Erhitzen durch eine Flamme, induktives Erhitzen, etc. Auch eine Verbindung der Hülsen 4 durch Schweissverfahren, insbesondere durch Widerstandsschweißen ist möglich. Durch die gute seitliche Zugänglichkeit im Stator 2 können die zwei Hülsen 4 gut aneinander gepresst, positioniert und anschliessend verbunden werden.

In einer Ausführungsform des Verfahrens wird die Formlitze 1 nach dem Ablängen an ihren beiden Enden 1a kontaktiert. Die Kontaktierung erfolgt vorzugsweise über einen bestimmten Längsabschnitt am jeweiligen Ende 1a der Formlitze 1 und vorzugsweise durch einen Schweißvorgang, vorzugsweise durch Widerstandsschweißen Durch das Schweißen kann eine optimale Verbindung über die gesamt Länge des zu verbindenden Längsabschnittes gewährleistet werden. Dieser stabile Prozess ist vor allem wegen der gegebenen Wirtschaftlichkeit interessant für die Automobilindustrie. Mit dieser Kontaktierung ist auch eine mechanische Verbindung der Einzeldrähte der Formlitze 1 geschaffen, die ein Aufdrehen der Formlitze 1 und ein Verschiebung der Einzeldrähte innerhalb der Formlitze 1 axial zueinander verhindert. Der Verbindungsvorgang umfasst dabei vorzugsweise alle Einzeldrähte am jeweiligen Ende 1a der Formlitzen 1, um die optimale Stabilität und elektrische Verbindung zu gewährleisten.

Dadurch, dass ein Aufdrillen und daraus resultierendes Verklemmen der Formlitze 1 verhindert wird, kann auf ein weniger aufwändiges Kraftüberwachungssystem für den Einschiebvorgang in die Nuten 2a des Stators 2 zurückgegriffen werden. Ebenso wird die Prozessbeherrschbarkeit verbessert, da dieses Risiko vermindert ist. Die üblichen leitenden Verbindungsverfahren sind meist nicht automotiv-konform, da vergleichsweise lange geheizt werden muss, beispielsweise um die zu verbindenden Enden zu verzinnen. Dies bringt dann auch in den nachfolgenden Prozessen, wie etwa dem Biegen der Formlitzen 1, Probleme mit sich, da etwa die Isolation bei zu starker Erwärmung aufgerissen werden kann. Außerdem ist eine beispielsweise Lötverbindung an den Enden 1a keine geometrisch definierte Verbindung der Einzellitzen.

Die Einzeldrähte der Formlitze 1 können dabei vor dem Ablängen an vorzugsweise beiden Enden 1a kontaktiert, d.h. sowohl elektrisch leitend kontaktiert als auch mechanisch verbunden, werden. Bei dieser Variante werden die Formlitzen 1 in einem darauffolgenden Prozessschritt abgelängt. Durch das elektrische Kontaktieren der Einzeldrähte der Formlitzen 1 vor dem Einsetzen in den Stator der elektrischen Maschine ist eine elektrische Prüfung der Formlitze 1 oder eines aus mehreren Formlitzen 1 gebildeten Formstabes vor dem Einbau möglich, wodurch die Qualitätssicherung um einiges verbessert werden kann. Überdies vereinfacht die klar definierte Geometrie der Enden 1a der Formlitze 1 maßgeblich die Automatisierung im Gegensatz zu üblichen Formlitzen, deren Geometrie sich durch Aufdrillen oder Verschiebung der Einzeldrähte verändern kann. Im weiteren Herstellungsprozess des Stators 2 einer elektrischen Maschine vereinfacht sich auch das Kontaktieren der inneren und äusseren Formlitze 1 innerhalb jeder der Statornuten 2a sowie der unregelmässigen Verschaltungen, da die Einzeldrähte durch das jeweils gewählte Verbindungsverfahren zumindest teilweise auch schon elektrisch verbunden sind.

Vorzugsweise wird zumindest eines der kontaktierten - und damit auch mechanisch verbundenen - Enden 1a der Formlitzen 1 auch kompaktiert, d.h. es wird der Querschnitt dieses Endes 1a oder zumindest an einer Umfangsposition der Durchmesser oder zumindest die Breite an einer Stelle dieses Endes 1a vermindert. Durch diesen Schritt der Kompaktierung vorzugsweise beider Enden 1a der Formlitze 1 kann erreicht werden, dass die Außengeometrie der Enden 1a genauso wie jene des mittleren Längsbereiches 1b der Formlitzen 1 vorzugsweise an jeder Stelle des Umfangs kleiner ist als die Nutgeometrie. Damit können die erfindungsgemässen Formlitzen 1 mit ihren kontaktierten und kompaktierten Enden 1a in die Statornuten 2a automatisiert eingeschoben werden. Ein radiales Einschieben in den Stator 2 ist bei parallelen Nuten 2a mit Nutfuss mit übereinander-liegenden (und nicht nebeneinanderliegenden) Formstäben wegen des Nutfuss nicht möglich. Bei innenlaufenden Motoren mit trapezförmigen Nuten 2a ist dies ebenfalls nicht möglich, weil bei innenlaufenden Maschinen sich das Trapez nach innen verjüngt. Wenn die Form der Nuten oder die Positionierungsart der Formlitzen 1 (z.B. nebeneinanderliegend) 2a dies aber erlaubt, können die Formlitzen 1 selbstverständlich auch radial eingeschoben werden.

Bei einer besonders bevorzugten Ausführungsform einer Formlitze 1 ist der umhüllende Querschnitt der Formlitze 1 in zumindest einem der Längsabschnitte miteinander verbundener Einzeldrähte geringer als der Querschnitt im anschliessenden Längsabschnitt. Die Querschnittsform der Formlitze 1 entspricht der Trapezform der Statornut 2a, zumindest im mittleren Längsabschnitt zwischen den elektrisch und mechanisch verbundenen und auch zu geringerem Querschnitt kompaktierten Enden 1a. Der geringere Querschnitt ist dabei zumindest an demjenigen Ende der Formlitze 1 am axial in den Stator 2 eingeschobenen Ende der Formlitze 1 vorgesehen. Er liegt in Längsrichtung einer geraden Formlitze 1, d.h. im Anfangszustand vor einem allfälligen Biegevorgang, gesehen komplett innerhalb des grösseren Querschnitts der Formlitze 1, der zumindest über den Längsabschnitt vorgesehen ist, der innerhalb der Statornut 2a zu liegen kommt.

Nach dem axialen Einschieben der Formlitzen 1 in die Nuten 2a des Stators 2 ergibt sich eine Konfiguration mit noch gerader Ausrichtung der Formlitzen 1. Durch die Kontaktierung vorzugsweise an beiden Enden 1a der Formlitze 1 werden beim Einschieben die Formlitzen 1 selbst nicht beschädigt und auch jeweils benachbarte Formlitzen 1 oder der Stator werden nicht beschädigt. Sowohl eine Beschädigung der Isolation der Einzeldrähte und/oder der Nutisolation kann verhindert werden, gleich ob sich die Nutisolation schon in der Nut 2a befindet oder sich auf der Formlitze 1 zumindest vor dem Einschieben befindet. Ebenso kann eine Beschädigung des Stators 2, beispielsweise ein Zerkratzen der Bleche, verhindert werden, wodurch den Wirkungsgrad der Maschine verschlechternde Kurzschlüsse verhindert werden können.

In einer Ausführung mit mehreren Formlitzen 1 in einer Nut 2a mit nicht parallelen Wänden, etwa in Nuten 2a eines innenlaufenden Motors, kann auch nur die Geometrie der Kontaktierung des Endes 1a der letzten eingeschobenen Formlitze 1 kleiner oder gleich groß wie die Nutgeometrie sein. Bei einem radialen Einfügen kann es ebenfalls sinnvoll sein, die Enden 1a kontaktiert zu haben, da hier ebenfalls die Gefahr eines Aufdrehens besteht. Hier ist es aber unwichtig, ob der Durchmesser bzw. der Querschnitt im Längsabschnitt der Kontaktierung grösser oder kleiner ist als die Nut 2a, da die Kontaktierung nicht durch die Nut 2a geführt wird.

Nach dem Einschieben werden die Formlitzen 1 meist gebogen, damit die Verschaltung der Formlitzen 1 zur Wicklung des Stators 2 im nachfolgenden Prozess(schritt) einfach vollzogen werden kann. Fig. 2 zeigt schematisch einen Stator mit zwei Formlitzen 1, die über Verbindung wie in Fig. 1 ganz rechts (Buchstabe C) mechanisch und elektrisch verbunden sind. Selbstverständlich sind aber auch andere Arten der Herstellung der Verschaltung der Formlitzen 1 untereinander möglich. Die Formlitzen 1 werden aufeinander hin gebogen und über die Hülsen 4 anschliessend verbunden. Dadurch, dass eine flächige Verbindung zwischen den zwei Hülsen 4 hergestellt wird, ist der Winkel zwischen den zwei Hülsen frei wählbar. Damit kann eine Gegenbiegung hinter dem Längsabschnitt der Hülse 4 der Formlitzen 1 vermieden werden, wodurch sich der Vorteil eines kürzeren Wickelkopfes ergibt, wie in Fig. 2 zu erkennen ist.

In einer vorteilhaften Ausführung einer Formlitze 1 kann zumindest ein Ende 1a linienförmig, kegelig, pyramidenförmig oder unregelmässig zulaufend zugespitzt sein, was das Einfügen in den Stator 2 natürlich vereinfacht. Ebenso kann dies für den nachgelagerten Verbindungsprozess im Wickelkopf des Stators 2 Vorteile bieten.

Beim Biegeprozess besteht die Gefahr, dass während des Biegens die Formlitze 1 aus der Nut 2 gezogen wird. Durch die Vorkontaktierung kann definiert die Formlitze 1 zurückgehalten und die axiale Position genau bestimmt werden. Durch das Kontaktieren der Enden 1a der Formlitze 1 wird das Kontaktieren/Verschalten der eingeschobenen Formlitzen 1 im Stator 2 sowie der unregelmässigen Verschaltungen vereinfacht, da die Einzeldrähte durch das Kontaktieren schon elektrisch verbunden sind. Es müssen nur noch die zwei verbundenen Enden 1a miteinander elektrisch verbunden werden. Dies bedeutet, dass auf zwei schon vorkontaktierte und geometrisch definierte Flächen/Volumenkörper eine elektrische/mechanische Verbindung angebracht werden kann.

Da zwischen den einzelnen verbogenen Formlitzenverbindungen im Wickelkopf nur ein Abstand von einer Zahnbreite besteht, gestaltet sich ein Kontaktieren der Einzeldrähte der jeweiligen Formlitzen 1 wie auch der Formlitzen 1 zueinander im eingebauten und verbogenen Zustand als sehr schwierig. Durch die erfindungsgemäss in den einzelnen Formlitzen 1 schon elektrisch leitend verbundenen Einzeldrähte entfällt ein kompliziertes elektrisches Verbinden der einzelnen Drähte innerhalb der elektrischen Maschine. Durch das Vorkontaktieren ist auch ein kleinerer Wickelkopf möglich, da der Zugang zum Kontaktieren der einzelnen Einzeldrähte innerhalb einer Formlitze nicht mehr gegeben sein muss. Nur die zwei oberen Kanten der Formlitzen 1 müssen miteinander verbunden werden.

Durch das Kontaktieren der Enden 1a der Formlitzen 1 kann ein Aufdrillen der Formlitze 1 beim Biegen oder kann auch eine axiale Verschiebung einzelner Einzeldrähte innerhalb einer Formlitze 1 - was eine nachträgliche elektrische Kontaktierung zur Verbindung mit anderen Formlitzen 1 schwierig macht - sicher verhindert werden. Auch die Verletzung der Isolation im Wickelkopf des Stators 2 durch einzelne herausstehende Einzeldrähte kann verhindert werden, wenn die Enden 1a der Formlitzen 1 vor dem Biegen schon kontaktiert und die Einzeldrähte damit auch mechanisch miteinander verbunden sind.

Die elektrisch leitende und auch mechanisch fixierende Verbindung von zwei zugespitzten Enden 1a zweier unterschiedlicher Formlitzen 1 kann - besonders vorteilhaftbei einem geometrisch definierten Ende (z.B. zugespitzte Ausführungsform der Enden 1a, oder auch definierte flache Geometrie oder Geometrie, bei welcher sich eine Kerbe zwischen den Formlitzen 1 befindet) durch ein Verfahren hergestellt werden, bei dem Strom von einer Elektrode E in die spitz zulaufenden Enden 1a der Formlitzen 1 fließt und somit durch das Zusammenschmelzen der Formlitzen 1 mit oder ohne Zusatzstoffen eine elektrische und mechanische Verbindung 3 geringer Dimensionen, im Wesentlichen etwa punkt- oder linienförmig, herstellt. In einer Ausführungsform kann die Verbindung von zwei zugespitzten Enden 1a zweier Formlitzen 1 durch ein TIG-Schweißverfahren eventuell ohne Zusatzstoff, hergestellt werden. Die Formlitzen 1 sind mit ihren mit Hülsen 4 versehenen Enden 1a aufeinander hin gebogen und an den Berührungspunkten in gleicher Weise mit einer elektrischen und mechanischen Verbindung 3 geringer Dimensionen, im Wesentlichen etwa punkt- oder linienförmig, versehen.

In einer anderen vorteilhaften Ausführungsform der Erfindung kann die Verbindung zweier zusammenlaufender Formlitzen 1 mit oder ohne Hülsen 4 an den den Stator 2 überragenden Enden 1a durch Widerstandsschweissen oder einem gleichartigen Verfahren auch linienförmig über einen grösseren Längsabschnitt der Enden 1a oder auch flächig durchgeführt werden. Auch dabei bietet die definierte Geometrie der Enden 1a Vorteile gegenüber Formlitzen aus unverbundenen Einzeldrähten.

Es besteht durch das Vorkontaktieren der Enden 1a der Formlitzen 1 und einem eventuellen Anspitzen der Enden 1a auch die Möglichkeit, den vorher genannten Kontaktierungsprozess einzusetzen. Dies hat den Vorteil, dass nur Platzbedarf oberhalb der Formlitzen 1 besteht, während seitlicher Platzbedarf nicht nötig ist. Damit kann zum einen der Platz zwischen Formlitzen 1 und Kühlmantel des Stators 2 genutzt werden, und zum anderen kann dieser Kühlmantel schon in einem früheren Prozessschritt als bei herkömmlichen Fertigungsverfahren auf dem Stator 2 angebracht werden. Da der radiale Platz zwischen den Formlitzenverbindungen eine Zahnbreite zwischen den Nuten 2a breit ist und dieser beim Verbindungsprozess durch das vorgängige Kontaktieren nicht benötigt wird, ist das Zahndesign viel freier wählbar als bislang. Dies ermöglicht die volle Freiheit für die magnetische Auslegung der elektrischen Maschine, was insbesondere für Antriebsmotoren von Elektrofahrzeugen von besonderer Bedeutung ist.

Durch das Kontaktieren der Enden der Formlitze 1 entstehen klar definierte End-Geometrien, die massgeblich die Automatisierung der Biegung vereinfachen, da die Formlitze 1 besser in Form bleibt als gegeneinander bewegliche Einzeldrähte, deren Geometrie sich durch ein Aufdrillen verändern kann.

Andere Möglichkeiten zur Verbindung der Enden 1a der Formlitzen werden nachfolgend beispielhaft erläutert.

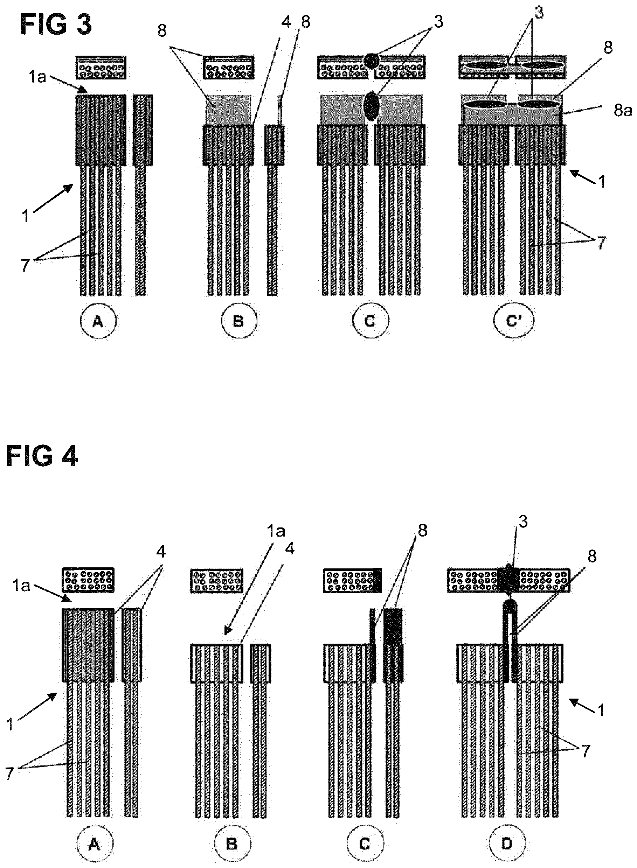

Die Fig. 3 zeigt eine Variante, bei welcher eine Lasche 8 längs in die Hülse 4 gesteckt ist. In einem ersten Schritt, ganz links mit dem Buchstaben A dargestellt, sind Hülse 4 und Lasche 8 gleich lang. Zusätzlich werden ebenfalls die Einzeldrähte 7 der rohen Formlitze 1 in die Hülse 4 gesteckt. Hülse 4, Lasche 8 und die Einzeldrähte 7 werden gemeinsam vorkompaktiert. Dabei wird, wie auch schon im Zusammenhang mit Fig. 1 erläutert, die Einzeldrahtisolation erhitzt und schmilzt. Durch das Verpressen während des Vorkompaktierens tritt die Isolation vorne an der Formlitze 1 aus.

Beim anschliessenden Kürzen der Formlitze 1 und der Hülse 4 wird die Lasche 8 ausgenommen, so dass sie schliesslich über das Ende 1a der Formlitze 1 und über die Hülse 4 hinausragt. Dies ist in Fig. 3 unter Buchstabe B dargestellt. Das Kürzen kann beispielsweise durch Fräsen oder durch einen Blechschneideprozess erfolgen. Nun steht nur noch die Lasche 8 mit einer genügenden Wandstärke für den nachgehenden Verbindungsprozess aus der Hülse 4 heraus. Vorzugsweise kommt eine Lasche 8 aus reinem Kupfer zum Einsatz. Nach Entfernung allenfalls verbliebener Verschmutzung kann diese Lasche 8 für den nachgehenden Verbindungsprozess benutzt werden. Dabei können etwa zwei Laschen 8 verschiedener Formlitzen 1 miteinander direkt verschweißt werden, wie in Fig. 3, Buchstabe C, dargestellt ist.

Die Laschen 8 können dabei im Verbindungsbereich 3 mit ihren ebenen Flächen oder auch mit ihren Seitenkanten aneinander liegen. Allenfalls kann durch das Hinzufügen eines Verbindungsstückes 8a aus einem elektrisch leitfähigen Material (beispielsweise Kupferbalken), welcher über zwei Verbindungsstellen 3 mit beiden Laschen 8 mechanisch und elektrisch verbunden ist, die Verbindung der Formlitzen 1 bewerkstelligt werden. Eine derartige Verbindung ist in Fig. 3 ganz rechts, beim Buchstaben C', dargestellt. Durch die gute Zugänglichkeit von oben im Stator 2 können all diese Schweissprozesse von oben ausgeführt werden.

Wie in der Serie der Fig. 4 zu erkennen ist, kann die Lasche 8 allenfalls auch an die schon gekürzte Hülse 4 angeschweißt werden. In Fig. 4 entspricht das der Darstellung beim Buchstaben C. Durch die gute Zugänglichkeit von oben im Stator können die beiden so gebildeten Fahnen werden dann miteinander von oben verschweißt werden, wie dies in Fig. 4 wieder ganz rechts, beim Buchstaben D, dargestellt Auch könnte beispielsweise von einer Hülse 4 ausgegangen werden, welche einseitig dicker gestaltet ist. Während des Abschneide Prozesses der Formlitze 1 und der Hülse 4 wird eine Stufe in die Hülse 4 geschnitten, so dass die dickere Seite als Lasche 8 heraussteht.

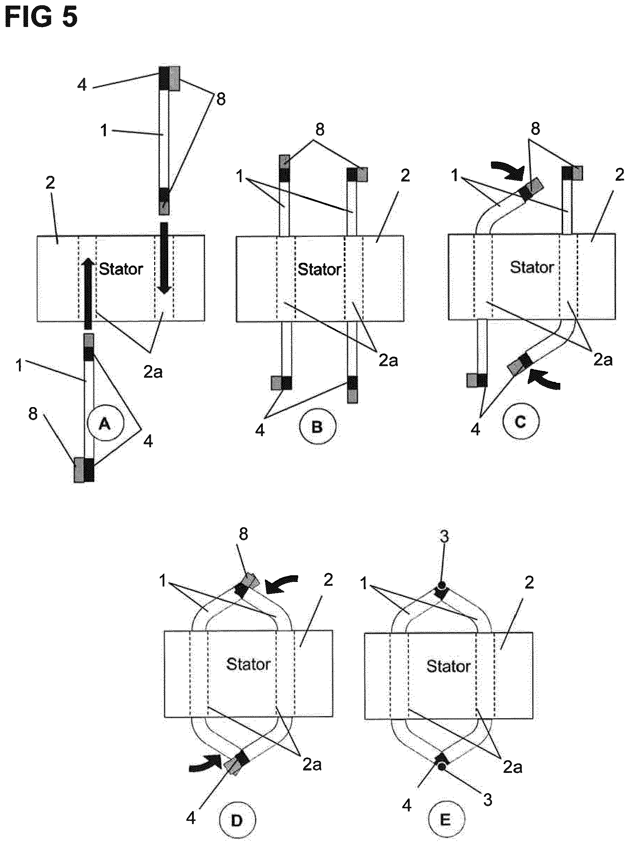

Eine vorteilhafte Ausführungsvariante zur Herstellung der Wicklung eines Stators unter Verwendung von Formlitzen 1 mit Laschen 8 an den Hülsen 4 ist in der Abfolge von Schritten der Fig. 5 dargestellt. Dieses Verfahren kann bei allen Formlitzen 1 mit Laschen 8 angewendet werden. Vorzugsweise kommen dabei Formlitzen 1 zum Einsatz, bei welchen die Laschen 8 an beiden Enden vorgesehen, aber asymmetrisch ausgeführt sind. Die Lasche 8 am Ende 1a der Formlitze 1, welches Ende durch den Stator 2 gesteckt wird, ist länglich und die Hülse in axialer Richtung überragend ausgeführt, so dass sie den zur Verfügung stehenden Querschnitt der Statornut 2a nicht überschreitet. Die Lasche 8 am anderen Ende 1a der Formlitze 1, welche nicht durch den Stator 2 gesteckt wird, ist prinzipiell frei in ihrer Geometrie gestaltbar. Vorzugsweise ist sie als radial von der Hülse 4 wegragende Lasche 8 ausgeführt. Die Formlitzen 1 können zudem von verschiedenen Positionen in der Nut von verschiedenen Seiten her eingesteckt werden (Abbildungen der Buchstaben A und B der Fig. 5). Durch entsprechende Wahl der Geometrie der Laschen 8 und der Seiten, von welcher sie eingesteckt werden, befinden sich die Laschen 8 nach dem Biegen (Buchstabe C) direkt übereinander (wie in der Abbildung beim Buchstaben D der Fig. 5). Dadurch kann ein zweiter Biegeprozess eingespart werden. Im Anschluss kann einer der oben bereits erläuterten Verbindungsverfahren angewendet werden, um die aneinanderliegenden Laschen 8 mechanisch und elektrisch zum Zustand wie bei Buchstabe E der Fig 5 dargestellt zu verbinden. Auch hier kann wieder der Vorteil eines kürzeren Wickelkopfes erzielt werden.

### Bezugszeichenliste

- 1: Formlitze
- 1a: Ende der Formlitze
- 2: Stator
- 2a: Nut des Stators
- 3: Verbindung zwischen Formlitzen
- 4: Hülse
- 7: Einzeldraht
- 8: Lasche

## Patentansprüche

1. Wicklung für einen Stator (2) einer elektrischen Maschine, bestehend aus miteinander mechanisch als auch elektrisch leitend verbundenen Formlitzen (1), welche ihrerseits aus einer Mehrzahl von einzeln isolierten und vorteilhaft parallel verlaufenden und vorzugsweise verdrillten Einzeldrähten (7) und gegebenenfalls einer allen Einzeldrähten gemeinsamen äusseren Umhüllung aufgebaut sind, wobei zumindest einige der Einzeldrähte (7) jeder Formlitze (1) an zumindest einem Ende (1a) der Formlitze (1) durch eine diese Einzeldrähte (7) umschliessende Hülse (4) aus elektrisch leitendem Material mechanisch und elektrisch leitend miteinander und mit der Hülse (4) verbunden sind, und die Hülsen (4) zweier in der Wicklung in Richtung des Stromflusses aufeinanderfolgender Formlitzen (1) mechanisch und elektrisch leitend verbunden sind, **dadurch gekennzeichnet, dass** die Hülsen (4) an zumindest einem Ende der Formlitzen (1) mit einer Lasche (8) versehen sind und die Verbindung zweier Formlitzen (1) über die zumindest eine Lasche (8) hergestellt ist.

2. Wicklung nach Anspruch 1, **dadurch gekennzeichnet, dass** sich die Lasche (8) axial über das Ende (1a) der Formlitzen (1) hinaus erstreckt oder radial von der Formlitze (1) weg ragt.

3. Wicklung nach Anspruch 2, **dadurch gekennzeichnet, dass** ein einem Ende der Formlitze (1) eine sich axial über das Ende der Formlitzen (1) hinaus erstreckende Lasche (8) und am entgegengesetzten Ende der Formlitze eine radial von der Formlitze (1) weg ragende Lasche (8) angeordnet sind.

4. Wicklung nach Anspruch 2 oder 3, **dadurch gekennzeichnet, dass** aufeinanderfolgende Formlitzen (1) jeweils entgegengesetzt ausgerichtet sind und die Laschen (8) unterschiedlicher Ausrichtung miteinander verbunden sind.

5. Wicklung nach einem der Ansprüche 1 bis 4, **dadurch gekennzeichnet, dass** das äußerste Ende jedes Längsabschnittes am Ende (1a) der Formlitze (1) einschliesslich der Hülse (4) zugespitzt ausgeführt ist und zumindest linienförmig oder dachartig zulaufend endet oder ein flaches Ende mit einer Schweißnaht entlang der Verbindungslinie vorgesehen ist, oder eine Kerbe aufweist.

6. Wicklung nach einem der Ansprüche 1 bis 5, **dadurch gekennzeichnet, dass** die Hülsen (4) und der Bereich der flächigen Verbindung mit den Hülsen (4) der jeweils vorhergehenden bzw. nachfolgenden Formlitzen (1) in einem Längsabschnitt der Formlitzen (1) angeordnet sind, der in Bezug auf die Längsrichtung der Statornut (2a) schräg verläuft, und die Hülse (4) sowie die Formlitze (1) am Ende dieses schrägen Längsabschnittes endet.

7. Elektrische Maschine mit einem Stator (2), insbesondere Drehfeldmaschine, wie Motor oder Generator, insbesondere für ein Elektro- oder Hybridfahrzeug, deren Wicklung unter Verwendung von Formlitzen (1) hergestellt ist, **dadurch gekennzeichnet, dass** die Wicklung gemäss einem der Ansprüche 1 bis 6 aufgebaut ist.

8. Verfahren zur Herstellung der Wicklung nach einem der vorhergehenden Ansprüche für einen Stator (2) einer elektrischen Maschine, umfassend das Einbringen vorgefertigter Formlitzen (1) in Nuten (2a) des Stators (2) und die anschließende Herstellung einer zumindest elektrisch leitenden Verbindung zwischen den aus den Statornuten (2a) herausragenden Enden (1a) der Formlitzen (1), wobei zumindest einige der Einzeldrähte (7) jeder Formlitze (1) an zumindest einem Ende (1a) der Formlitze (1) durch eine diese Einzeldrähte (7) umschließende Hülse (4) aus elektrisch leitendem Material mechanisch und elektrisch leitend miteinander und mit der Hülse (4) verbunden werden, und die Hülsen (4) zweier in der Wicklung in Richtung des Stromflusses aufeinanderfolgender Formlitzen (1) mechanisch und elektrisch leitend verbunden werden, **dadurch gekennzeichnet, dass** die Anbringung der Hülse (4) und die mechanisch und elektrisch leitende Verbindung mit den Einzeldrähten (7) bereits vor dem Einbringen der Formlitze (1) in die Statornut (2a) durchgeführt wird.

9. Verfahren nach Anspruch 8, **dadurch gekennzeichnet, dass** das äußere Ende (1a) der Formlitze (1) einschließlich der Hülse (4) vor dem Verbinden aufeinanderfolgender Formlitzen (1) abgeschnitten wird.

10. Verfahren nach Anspruch 8 oder 9, **dadurch gekennzeichnet, dass** die Hülsen (4) durch ein Schweißverfahren mechanisch und elektrisch leitend mit den Einzeldrähten (7) verbunden werden.

11. Verfahren nach Anspruch 8 oder 9, **dadurch gekennzeichnet, dass** die Hülsen (4) durch ein Lötverfahren mechanisch und elektrisch leitend mit den Einzeldrähten (7) verbunden werden.

12. Verfahren nach einem der Ansprüche 8 bis 11, **dadurch gekennzeichnet, dass** die Hülsen (4) oder allfällige abstehende Fortsätze, Fahnen, Laschen (8) oder dergleichen an der Verbindungsstelle flächig aneinander in Anlage gebracht werden.

## Claims

1. A winding for a stator (2) of an electric machine, consisting of shaped strands (1) connected to one another mechanically and electrically conductively, which for their part are built from a plurality of individually insulated and advantageously parallel running and preferably twisted individual wires (7) and, if appropriate, an outer coating common to all individual wires, at least a few of the individual wires (7) of each shaped strand (1) at least at one end (1a) of the shaped strand (1) being connected mechanically and electrically conductively by means of a sleeve (4), made from electrically conductive material and enclosing these individual wires (7), to one another and to the sleeve (4), and the sleeves (4) of two shaped strands (1), which follow one another in the winding in the direction of current flow, being mechanically and electrically conductively connected, **characterized in that** the sleeves (4) are provided with a tab (8) at least at one end of the shaped strands (1) and the connection of two shaped strands (1) is produced by means of the at least one tab (8).

2. The winding according to Claim 1, **characterized in that** the tab (8) extends axially beyond the end (1a) of the shaped strands (1) or protrudes radially away from the shaped strand (1).

3. The winding according to Claim 2, **characterized in that** a tab (8) extending axially beyond the end of the shaped strands (1) is arranged at one end of the shaped strand (1), and a tab (8) protruding radially away from the shaped strand (1) is arranged at the opposite end of the shaped strand.

4. The winding according to Claim 2 or 3, **characterized in that** successive shaped strands (1) are aligned oppositely in each case and the tabs (8) of different alignment are connected to one another.

5. The winding according to one of Claims 1 to 4, **characterized in that** the outermost end of each longitudinal section is realized in a pointed manner at the end (1a) of the shaped strand (1) including the sleeve (4) and ends in an at least linear or roof-shaped tapered manner or is provided with a flat end with a weld seam along the connecting line, or has a notch.

6. The winding according to one of Claims 1 to 5, **characterized in that** the sleeves (4) and the region of the planar connection to the sleeves (4) of the respectively preceding or following shaped strands (1) are arranged in a longitudinal section of the shaped strands (1), which runs at an angle with respect to the longitudinal direction of the stator groove (2a), and the sleeve (4) and the shaped strand (1) end at the end of this angled longitudinal section.

7. An electric machine having a stator (2), particularly an induction machine, such as a motor or generator, particularly for an electric or hybrid vehicle, the winding of which is produced using shaped strands (1), **characterized in that** the winding is built according to one of Claims 1 to 6.

8. A method for producing the winding according to one of the preceding claims, for a stator (2) of an electric machine, comprising the introduction of prefabricated shaped strands (1) in grooves (2a) of the stator (2) and the subsequent production of an at least electrically conductive connection between the ends (1a) of the shaped strands (1) protruding out of the stator grooves (2a), at least a few of the individual wires (7) of each shaped strand (1) at least at one end (1a) of the shaped strand (1) being connected mechanically and electrically conductively by means of a sleeve (4), made from electrically conductive material and enclosing these individual wires (7), to one another and to the sleeve (4), and the sleeves (4) of two shaped strands (1), which follow one another in the winding in the direction of current flow, being mechanically and electrically conductively connected, **characterized in that** the attachment of the sleeve (4) and the mechanically and electrically conductive connection to the individual wires (7) is carried out already before the introduction of the shaped strand (1) into the stator groove (2a).

9. The method according to Claim 8, **characterized in that** the outer end (1a) of the shaped strand (1) including the sleeve (4) is cut off prior to the connection of successive shaped strands (1).

10. The method according to Claim 8 or 9, **characterized in that** the sleeves (4) are mechanically and electrically conductively connected to the individual wires (7) by means of a welding method.

11. The method according to Claim 8 or 9, **characterized in that** the sleeves (4) are mechanically and electrically conductively connected to the individual wires (7) by means of a soldering method.

12. The method according to one of Claims 8 to 11, **characterized in that** the sleeves (4) or possible protruding appendages, lugs, tabs (8) or the like are brought into contact with one another in a planar manner at the connection location.

## Revendications

1. Bobine pour un stator (2), d'une machine électrique composée de torons profilés (1) reliés entre eux de manière mécanique et également conductrice d'électricité, qui pour leur part sont constitués de fils métalliques individuels (7), isolés individuellement et s'écoulant avantageusement à la parallèle et de préférence torsadés et le cas échéant d'une enveloppe extérieure commune à tous les fils métalliques individuels, sur au moins une extrémité (1a) du toron profilé (1), au moins certains des fils métalliques individuels (7) de chaque toron profilé étant reliés l'un à l'autre de manière mécanique et conductrice d'électricité par une douille (4) entourant lesdits fils métalliques individuels (7) en matière conductrice d'électricité et avec la douille (4), et les douilles (4) de deux torons profilés (1) successifs dans la direction du flux d'électricité étant reliées de manière mécanique et conductrice d'électricité, **caractérisée en ce que** sur au moins une extrémité des torons profilés (1), les douilles (4) sont munies d'une patte (8) et la liaison de deux torons profilés (1) est établie par l'au moins une patte (8).

2. Bobine selon la revendication 1, **caractérisée en ce que** la patte (8) s'étend en direction axiale au-delà de l'extrémité (1a) des torons profilés (1) ou saillit en direction radiale, en éloignement du toron profilé (1).

3. Bobine selon la revendication 2, **caractérisée en ce que** sur une extrémité du toron profilé (1) est placée une patte (8) s'étendant en direction axiale au-delà de l'extrémité des torons profilés (1) et sur l'extrémité opposée du toron profilé est placée une patte (8) saillant en direction radiale, en éloignement du toron profilé (1).

4. Bobine selon la revendication 2 ou 3, **caractérisée en ce que** des torons profilés (1) successifs sont chaque fois orientés à l'opposée et les pattes (8) de différente orientation sont reliées entre elles.

5. Bobine selon l'une quelconque des revendications 1 à 4, **caractérisée en ce que** l'extrémité extérieure extrême de chaque partie longitudinale sur l'extrémité (1a) du toron profilé (1) incluant la douille (4) est réalisée en pointe et se termine au moins en forme linéaire ou en convergence en forme de toit ou **en ce qu'**il est prévu une extrémité plate avec une soudure le long de la ligne de liaison, ou comporte une entaille.

6. Bobine selon l'une quelconque des revendications 1 à 5, **caractérisée en ce que** les douilles (4) et la zone de la liaison plate avec les douilles (4) des torons profilés (1) respectivement précédents ou suivants sont placées dans une partie longitudinale des torons profilés (1) qui s'étend en oblique par rapport à la direction longitudinale de la rainure de stator (2a) et la douille (4) ainsi que le toron profilé (1) se termine sur l'extrémité de ladite partie longitudinale.

7. Machine électrique dotée d'un stator (2), notamment machine à induction, telle que moteur ou générateur, notamment pour un moteur électrique ou hybride, dont la bobine est fabriquée en utilisant des torons profilés (1), **caractérisée en ce que** la bobine est constituée selon l'une quelconque des revendications 1 à 6.

8. Procédé de fabrication d'une bobine selon l'une quelconque des revendications précédentes pour un stator (2) d'une machine électrique, comprenant l'introduction de torons profilés (1) préfabriqués dans des rainures (2a) du stator (2) et la fabrication consécutive d'une liaison au moins conductrice d'électricité entre les extrémités (1a) des torons profilés (1), saillant hors des rainures de stator (2a), lors duquel, sur au moins une extrémité (1a) du toron profilé (1), on relie entre eux de manière mécanique et conductrice d'électricité et avec la douille (4) au moins certains des fils métalliques individuels (7) de chaque toron profilé (1) par une douille (4) entourant les fils métalliques individuels (7) en une matière conductrice d'électricité et on relie de manière mécanique et conductrice d'électricité les douilles (4) de deux torons profilés (1) successifs dans la bobine, en direction du flux d'électricité, **caractérisé en ce qu'**on procède au montage de la douille (4) et à la liaison mécanique et conductrice d'électricité des fils métalliques individuels (7) déjà avant l'introduction du toron profilé (1) in dans la rainure du stator (2a).

9. Procédé selon la revendication 8, **caractérisé en ce qu'**on coupe l'extrémité (la) extérieure extrême du toron profilé (1) incluant la douille (4) avant la liaison de torons profilés (1) successifs.

10. Procédé selon la revendication 8 ou 9, **caractérisé en ce qu'**on relie les douilles (4) de manière mécanique et conductrice d'électricité avec les fils métalliques individuels (7) par un procédé de soudage.

11. Procédé selon la revendication 8 ou 9, **caractérisé en ce qu'**on relie les douilles (4) de manière mécanique et conductrice d'électricité avec les fils métalliques individuels (7) par un procédé de brasage.

12. Procédé selon l'une quelconque des revendications 8 à 11, **caractérisé en ce que** sur la zone de liaison, on amène en application à plat les un(e)s contre les autres les douilles (4) ou des prolongements, drapeaux, pattes (8) éventuels débordants ou similaires.
